# EUROPÄISCHE PATENTANMELDUNG

(11) **EP 0 839 995 A1**
(43) Veröffentlichungstag der Anmeldung: **06.05.1998**
(21) Anmeldenummer: 97118417.1
(22) Anmeldetag: 23.10.1997
(51) Int. Cl.: F01N 3/20, F01N 3/28, F01N 5/02

(54) **Abgasreinigungskonverter**

(30) Priorität: 05.11.1996 DE 19645550
(71) Anmelder: Degussa Aktiengesellschaft, 60311 Frankfurt (DE)
(72) Erfinder: Gieshoff, Jürgen, Dr., 63599 Biebergemünd (DE); Domesle, Rainer, Dr., 63755 Alzenau-Kälberau (DE); Lox, Egbert, Dr., 63457 Hanau (DE); Kreuzer, Thomas, Dr., 61184 Karben (DE)

(57) **Zusammenfassung**

Die Erfindung betrifft einen Abgasreinigungskonverter zur Reinigung der Abgase von Verbrennungsmotoren. Der Konverter enthält in einem metallischen Konvertergehäuse (1) einen monolithischen Abgasreinigungskatalysator (4), der mit seinen Stirnflächen (5) in einen im wesentlichen ungehinderten Strahlungsaustausch mit einem Wärmeaustauscher (7) oder einem thermoelektrischen Wandler treten kann, welche an die Wandungen des Konverters gekoppelt sind. Die dadurch bewirkte Strahlungskühlung des Katalysators (4) begrenzt die Temperatur des Katalysators (4) auf einen maximalen Wert unterhalb der Zerstörungsschwelle des Katalysators (4) selbst bei einem motornahen Einbau des Konverters. Die gewonnene Abwärme kann in vielfältiger Weise genutzt werden.

## Beschreibung

Gegenstand der Erfindung ist ein Abgasreinigungskonverter für die Reinigung der Abgase von Verbrennungsmotoren. Bei den von Verbrennungsmotoren emittierten Schadstoffen handelt es sich im wesentlichen um Kohlenwasserstoffe, Kohlenmonoxid und Stickoxide, die durch geeignete Katalysatoren zu den unschädlichen Produkten Kohlendioxid und Wasser umgesetzt werden müssen.

Abgasreinigungskonverter bestehen aus einem Stahlgehäuse, in dem der eigentliche Abgasreinigungskatalysator angeordnet ist. Bei diesem handelt es sich überwiegend um einen monolithischen Katalysator in Form eines Wabenkörpers aus Metallfolien oder keramischem Material. Der Wabenkörper hat eine zylindrische Form beliebigen Querschnitts, der von einer Eintrittsstirnfläche zur Austrittsstirnfläche von parallelen Strömungskanälen für das Abgas durchzogen ist. Die Wandungen der Strömungskanäle sind mit einer katalytisch aktiven Beschichtung zur Umsetzung der im Abgas enthaltenen Schadstoffe ausgestattet. Alternativ hierzu werden auch Schaumstrukturen, Netze, Fasern oder geklebte Strukturen eingesetzt. Im folgenden werden diese Katalysatorstrukturen unter dem Oberbegriff 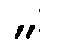 monolithischer Katalysator" zusammengefaßt.

Das Konvertergehäuse ist mit Zuführungsstutzen und Abführungsstutzen für das Abgas ausgestattet. Durch gasdichten Einbau des monolithischen Katalysators in das Konvertergehäuse wird das Abgas gezwungen, durch die Strömungskanäle bzw. längs der Strömungspfade des Monolithen zu fließen.

Ein wesentliches Problem bei der Abgasreinigung ist die Tatsache, daß die katalytisch aktive Beschichtung erst oberhalb bestimmter Temperaturen in der Lage ist, die Schadstoffe zu konvertieren. Zur Charakterisierung der Katalysatorformulierungen wird häufig die Anspringtemperatur angegeben. Es handelt sich dabei um diejenige Temperatur des Abgases, bei der 50% des jeweiligen Schadstoffes umgesetzt werden. Zur frühzeitigen Umsetzung der Schadstoffe könnte der Abgaskonverter möglichst dicht hinter dem Motor angeordnet werden. Dadurch würde eine Kühlung des Abgases durch lange Abgasleitungen zwischen Motor und Konverter vermieden. Gewöhnlich muß mit einem Temperaturverlust des Abgases von ca. 100°C pro Meter Leitungslänge gerechnet werden.

Der motornahe Einbau des Abgaskonverters kann jedoch im Dauerbetrieb und bei Vollast zur thermischen Schädigung der Katalysatorbeschichtung durch zu heiße Motorabgase führen. Die Schädigungen reichen dabei von einer Desaktivierung der Katalysatorbeschichtung durch Sinterung der katalytisch aktiven Komponenten bis zur mechanischen Zerstörung des Monolithen. Die maximal zulässige Arbeitstemperatur des Katalysators, bei der noch keine gesteigerte Desaktivierung auftritt, hängt von der Formulierung der Katalystorbeschichtung ab.

Bei Otto-Motoren muß mit maximalen Abgastemperaturen von 800 bis 1000°C gerechnet werden. Hinzu kommt die bei der Schadstoffumsetzung am Katalysator freigesetzte Wärmeenergie. Die Konverter werden daher in der Regel 1-2 m vom Motor entfernt installiert, um die maximalen Abgastemperaturen an Ort des Katalysators nach oben zu begrenzen.

Bestrebungen, motornahe Positionen für den Konverter zu realisieren, sind im wesentlichen auf Startkatalysatoren beschränkt, die nicht in der Lage sind, die gesamte Abgasmenge umzusetzen. Aufgabe dieser Startkatalysatoren ist es lediglich, die verstärkten Kohlenwasserstoffemissionen während der Kaltstartphase zu vermindern.

Das Problem für die motornahe Anbringung des Katalysators besteht also darin, die thermische Energie, die durch das Motorabgas und durch die exotherme Reaktion am Katalysator eingebracht wird, soweit abzuführen, daß eine Schädigung des Katalysators unterbleibt.

Eine naheliegende Möglichkeit ist die Ankopplung des Konverters an ein wärmeabführendes Medium in Form eines Wärmetauschers. Dabei geschieht der Wärmeübergang im wesentlichen durch Wärmeleitung (direkt Wärmeleitung und durch Konvektion). Die übertragene Wärmemenge ist dabei direkt proportional der Temperaturdifferenz zwischen heißem Katalysator und kaltem Wärmetauscher. Die übertragene Wärmemenge ist in diesem Fall im wesentlichen von der Differenz und nicht von der absoluten Höhe der Temperatur abhängig. Dies führt dazu, daß der Katalysator auch während der Startphase viel Wärme an den Wärmetauscherkreis abführt, obgleich dies in diesem Betriebszustand unerwünscht ist.

Aufgabe der Erfindung ist es, den Betrieb eines Konverters in motornaher Position zu ermöglichen, ohne daß es dabei zu einer Schädigung des Katalysators aufgrund zu hoher thermischer Belastung kommt.

Diese Aufgabe wird durch einen Abgasreinigungskonverter gelöst, welcher in einem metallischen Konvertergehäuse einen monolithischen Abgasreinigungskatalysator enthält, der von einer Eintrittsstirnfläche zur Austrittsstirnfläche von einer Vielzahl von Strömungspfaden für das Abgas durchzogen wird. Der Abgasreinigungskonverter ist dadurch gekennzeichnet, daß die mit den Stirnflächen des Katalysators im Strahlungsaustausch stehenden Wandungen des Konverters an eine Wärmesenke gekoppelt sind. Beispiele für Wärmesenken sind Luft-Abgaswärmetauscher, Wasser-Abgaswärmetauscher, Festkörper/Abgaswärmetauscher, aber auch thermoelektrische Wandler und andere Wärmetauscher, die die durch den Katalysator abgegebene Wärme einem weiteren Prozeß zuführen. Ein Beispiel für eine Abgabe der Wärme an einen Feststoff ist die Aufheizung eines Latentspeichers. Die im Latentmaterial gespeicherte Wärme kann bei einem nächsten Kaltstart zur Vorheizung des Motorkühlwassers genutzt werden.

Erfindungsgemäß wird also die Temperatur des Katalysators durch eine Strahlungskühlung auf einen für den Katalysator unschädlichen Maximalwert begrenzt. Im Falle einer Strahlungskühlung ist die übertragene Wärmemenge (bei gegebener Temperatur des kalten Wärmetauschermediums) proportional zur vierten Potenz der Katalysatortemperatur T⁴, so daß bei hohen Temperaturen wesentlich mehr Wärme übertragen wird als bei niedrigen. Der erfindungsgemäße Konverter vermeidet also die Kühlung des Katalysators im unteren Temperaturbereich und ermöglicht damit ein schnelles Aufheizen des Katalysators während der Kaltstartphase. Mit steigender Temperatur greift dann immer mehr die Strahlungskühlung ein und begrenzt die maximale Katalysatortemperatur auf für die katalytische Beschichtung ungefährliche Werte.

Um den Wärmeaustausch über Strahlung möglichst effektiv zu gestalten, sind die abstrahlenden Flächen, zwischen denen der Wärmeaustausch stattfindet, möglichst groß und mit hoher Emissivität auszuführen. Dies gilt insbesondere für die Stirnflächen des Katalysators. Die konkrete Auslegung des Konverters hängt von der zulässigen Arbeitstemperatur für die gewählte katalytische Beschichtung ab und kann vom Fachmann mit geringem Aufwand optimiert werden.

Bei der Umsetzung von Kohlenmonoxid und Kohlenwasserstoffen wird die chemisch gebundene Energie in Wärme umgewandelt. Dies geschieht auf der Katalysatoroberfläche, die aus diesem Grund eine Temperatur annehmen kann, die über der adiabatischen Temperatur liegt. Hier erweist sich das Konzept des strahlungsgeregeiten Katalysators als sehr vorteilhaft, da die Strahlung von der Katalysatoroberfläche an die kalte Wärmetauscherwand übertragen wird. Der Anteil der Gasstrahlung ist im Vergleich dazu sehr gering.

Als monolithische Katalysatoren eignen sich alle aus dem Stand der Technik bekannten Ausführungsformen. Geeignet sind Monolithe mit einer offenporigen Filterstruktur wie zum Beispiel Schäume, Netze oder Faserstrukturen, die unregelmäßige und miteinander verbundene Strömungspfade für das Abgas von der Eintrittsseite zur Austrittsseite aufweisen. Bevorzugt werden jedoch wabenförmige Monolithe verwendet, die regelmäßig angeordnete Strömungspfade für das Abgas in Form von parallelen Strömungskanälen aufweisen. Solche Monolithe können als sogenannte Wandflußfilter mit wechselseitig verstopften Strömungskanälen aber auch als Wabenkörper mit beidseitig offenen Strömungskanälen eingesetzt werden.

Die parallel ausgerichteten Strömungskanäle der Wabenkörper weisen eine Emissivität auf, die deutlich größer ist als die Emissivität des beschichteten Wandmaterials. Eine gute Emissivität ist bei den Wabenkörpern, fast unabhängig vom Wandmaterial, dann gegeben, wenn das Verhältnis von Kanalradius zur Kanallänge kleiner als 0,1 ist (analoges gilt auch für quadratische Kanäle).

Neben dem Einfluß der Emissivität auf die Wärmeübertragung ist die abstrahlende Fläche von großer Bedeutung. Besonders vorteilhaft für das Prinzip des strahlungsgeregelten Konverters ist es, große abstrahlende Flächen zu realisieren. Günstig sind daher Katalysatorkörper, deren Verhältnis ihrer effektiven abstrahlenden Flächen (insbesondere Stirnflächen) zu ihrer Mantelfläche Werte zwischen 0,5 und 10, bevorzugt zwischen 2 und 10, aufweisen. Unter der effektiven Fläche wird hier die geometrisch vorliegende Oberfläche verstanden. Diese kann deutlich über dem Wert der senkrechten Projektion der Fläche auf eine Ebene liegen. Im Falle eines Katalysatorkörpers in Form eines Kreiszylinders bedeutet ein Flächenverhältnis von 0,5 (Stirnflächen zur Mantelfläche), daß die Länge des Kreiszylinders gleich seinem Durchmesser ist. Für kleinere Verhältnisse verliert die Strahlungskühlung über die Stirnflächen immer mehr an Bedeutung. Bevorzugt werden daher scheibenförmige Katalysatorkörper mit Flächenverhältnissen von über 2 eingesetzt. Das zweckmäßige Flächenverhältnis ist nach oben nur durch die gewünschte Stärke der Strahlungskühlung und durch die mit zunehmendem Flächenverhältnis schlechter werdende mechanische Stabilität des Katalysatorkörpers begrenzt. Oberhalb eines Verhältnisses von 10 ist die mechanische Stabilität des scheibenförmigen Katalysatorkörpers ohne weitere Unterstützungsmaßnahmen nicht mehr gewährleistet.

Die folgenden Figuren zeigen einige mögliche Ausführungsformen der erfindungsgemäßen Abgasreinigungskonverter. Es zeigen
- **Figur 1:**: Konverter mit Luft-Wärmetauscher und seitlichem Abgaseintritt
- **Figur 2:**: Konverter mit Luft-Wärmetauscher und axialem Abgaseintritt
- **Figur 3:**: Konverter mit großer Querschnittsfläche des Katalysators

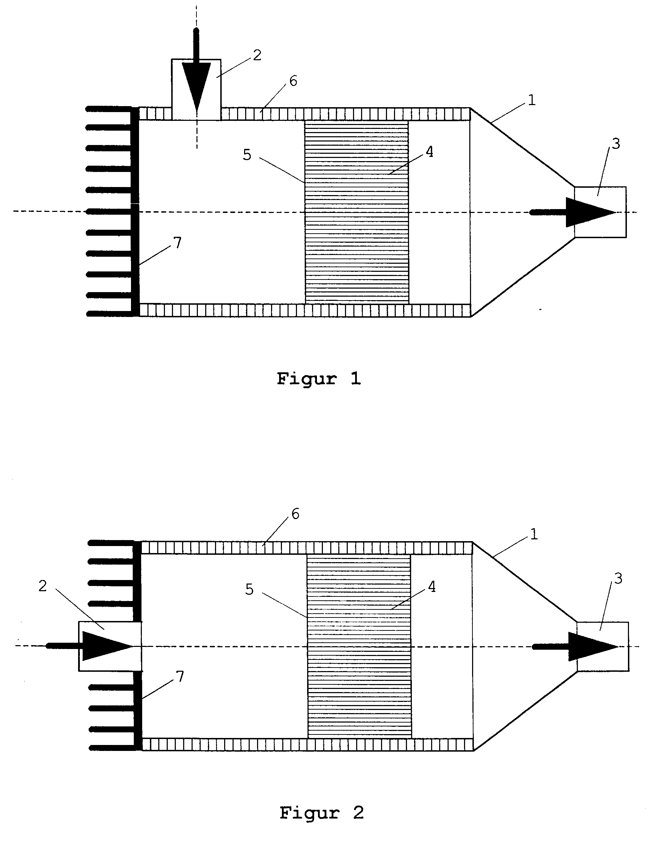

Figur 1 zeigt einen möglichen Aufbau des erfindungsgemäßen Konverters mit Luft-Wärmetauscher und seitlichem Abgaseintritt. Mit 1 ist das Konvertergehäuse bezeichnet, in welches der monolithische Katalysator 4 eingebaut ist. Das Abgas tritt seitlich am Stutzen 2 in das Konvertergehäuse ein. Der durch die seitliche Einkopplung auftretende Drall bewirkt eine gute Durchmischung des Abgases, führt aber auch zu einem erhöhten Wärmeaustausch mit den Mantelflächen des Konvertergehäuses. Aus diesem Grund ist eine Wärmeisolierung 6 vorgesehen. Sie vermindert außerdem Wärmeverluste des Monolithen in radialer Richtung. Die Wärmeisolierung kann neben bekannten Materialien mit schlechter Wärmeleitfähigkeit (z.B. Keramikauskleidungen) auch aus einem einfachen Blech bestehen, das den Monolithen und zumindest den Eintrittsbereich des Abgases in Form eines Doppelmantels umgibt. Der Luft-Wärmetauscher 7 steht der Anströmfläche des Katalysators 5 gegenüber und kann mit dieser in einen im wesentlichen ungehinderten Strahlungsaustausch treten.

Figur 2 zeigt den Konverter von Figur 1 mit axialem Zutritt des Abgases. Die Bezugsziffern haben dieselbe Bedeutung wie in Figur 1. Zur Verbesserung der Abgasverwirbelung können in den Konverter noch Prallbleche und Strömungsleitflächen eingebaut werden. Es ist aber dabei darauf zu achten, daß die Anströmfläche 5 des Katalysators und der Wärmetauscher 7 noch in ausreichendem Maße in einen Strahlungsaustausch treten können.

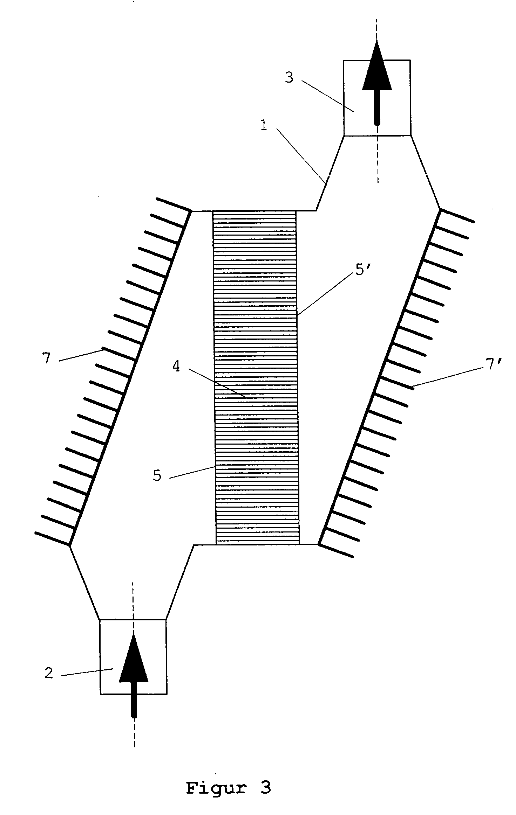

Für die Zwecke der Erfindung sind scheibenförmige Katalysatormonolithe mit möglichst großer Querschnittsfläche vorzuziehen, um die wärmeabstrahlende Fläche im Verhältnis zum gesamten Volumen des Katalysators zu maximieren. Eine geeignete Konverterkonstruktion für scheibenförmige Monolithe zeigt Figur 3. Diese Konstruktion ermöglicht sowohl die Kühlung der Anströmfläche 5 als auch der Abströmfläche 5' durch die beiden Wärmetauscher 7 und 7'.

Bei den gemäß der Erfindung zu verwendenden Wärmetauschern kann es sich um Luft-Wärmetauscher oder um Wasser-Wärmetauscher handeln. Die Verwendung von Wasser-Wärmetauschern ermöglicht eine direkte Ankopplung an den im Fahrzeug vorhandenen Kühlkreislauf. Der in Figur 3 vorgesehene Luft-Wärmetauscher wird dabei durch einen kleinen Wasser-Wärmetauscher ersetzt. Geht man von einem kleinen Fahrzeug aus, das etwa 33 kW

Motorleistung erbringt, so ist der Kühler auf eine Leistung von ebenfalls 33 kW ausgelegt. Die vom Konverter umzusetzende Leistung beträgt für die Oxidation von Kohlenmonoxid und Kohlenwasserstoffen etwa 3-6 kW. Dies ist die maximale Leistung, die durch die Wärmetauscherfläche übertragen werden muß. Der notwendige Wärmetauscher kann bei hinreichendem Wasserdurchsatz ein relativ kleines Bauvolumen aufweisen. Die Einkopplung der über Strahlung übertragenen Wärme an den Heizwasserkreislauf führt zu einem schnelleren Aufheizen des Kühlwassers.

Der erfindungsgemäße Konverter ermöglicht die Nutzung der Strahlungsabwärme des Katalysators in vielfältiger Weise. So ist die Verwendung von thermoelektrischen Wandlern möglich, die in die Wärmetauscher integriert werden können. Es handelt sich dabei um Halbleiterelemente, die in der Lage sind, Wärme mit einem Temperaturniveau zwischen 300 und 600°C in elektrische Energie umzuformen. Ihre Wirkungsweise entspricht der Serienschaltung von Thermoelementen. Analog den Thermoelementen benötigt der thermoelektrische Wandler neben der heißen Kontaktstelle auch eine kühle Kontaktsteile. Der Wirkungsgrad kann auf 2% abgeschätzt werden, so daß von den maximal übertragenen 4 kW etwa 50-80W elektrisch abgegriffen werden können.

Die Wärme kann -bei ausreichender Temperatur- auch für weitere Aggregate genutzt werden. Eine Möglichkeit stellt die Nutzung für thermisch arbeitende Klimaanlagen dar, wie sie schon industriell gefertigt werden. Solche Klimaanlagen bestehen aus einem Trocknungsrad, welches die feuchte Zuluft für den Fahrgastraum trocknet. Zur Entfeuchtung des Adsorptionsmittels kann die mit dem erfindungsgemäßen Konverter erzeugte heiße Prozeßluft verwendet werden. Die getrocknete Zuluft wird durch definiertes Anfeuchten mit Wasser für die Belüftung der Fahrgastzelle konditioniert. Die Verdampfung des zugeführten Wassers bewirkt eine Kühlung der Zuluft. Die Kombination einer solchen Klimaanlage mit dem erfindungsgemäßen Konverter ist besonders interessant, da hiermit hohe Prozeßtemperaturen zur Entfeuchtung des Trocknungsrades erzeugt werden können. Der Wirkungsgrad einer solche Maschine kann bei 1 liegen. Das bedeutet, daß mit Hilfe heißer Prozeßluft mit einem Energieinhalt von einer Kilowattstunde gekühlte Zuluft mit einem um eine Kilowattstunde verminderten Energieinhalt erzeugt werden kann (ohne Berücksichtigung des elektrischen Energiebedarfs).

## Patentansprüche

1. Abgasreinigungskonverter zur Reinigung der Abgase von Verbrennungskraftmaschinen enthaltend in einem metallischen Konvertergehäuse einen monolithischen Abgasreinigungskatalysator, welcher von einer Eintrittsstirnfläche zur Austrittsstirnfläche von einer Vielzahl von Strömungspfaden für das Abgas durchzogen wird,
**dadurch gekennzeichnet,**
daß die mit den Stirnflächen des Katalysators im Strahlungsaustausch stehenden Wandungen des Konverters an wenigstens eine Wärmesenke gekoppelt sind.

2. Abgasreinigungskonverter nach Anspruch 1,
**dadurch gekennzeichnet,**
daß als Wärmesenke Luft/Abgaswärmetauscher, Wasser/Abgaswärmetauscher und/oder Latentwärmespeicher verwendet werden.

3. Abgasreinigungskonverter nach Anspruch 2,
**dadurch gekennzeichnet,**
daß an die Wärmetauscher thermoelektrische Wandler gekoppelt sind.

4. Abgasreinigungskonverter nach Anspruch 1,
**dadurch gekennzeichnet,**
daß das Verhältnis ihrer effektiven abstrahlenden Flächen zu ihrer Mantelfläche zwischen 0,5 und 10, bevorzugt zwischen 2 und 10, liegt.

5. Abgasreinigungskonverter nach einem der vorstehenden Ansprüche,
**dadurch gekennzeichnet,**
daß als Katalysatorkörper ein monolithischer Wabenkörper verwendet wird, dessen Verhältnis des effektiven Radius der Strömungskanäle zur Länge der Strömungskanäle kleiner als 0,1 ist.
